# EUROPEAN PATENT SPECIFICATION

(11) **EP 3 206 501 B1**
(45) Date of publication and mention of the grant of the patent: **25.11.2020**
(21) Application number: 15780823.9
(22) Date of filing: 12.10.2015
(51) Int. Cl.: A21D 13/06, A21D 13/19, A21D 13/41

(54) **PROCESS FOR THE MANUFACTURE OF A LOW SODIUM BAKERY PRODUCT**
PROZESS ZUR HERSTELLUNG NATRIUMARMER BACKWAREN
PROCÉDÉ POUR FAIRE DES PRODUITS DE BOULANGERIE PRÉSENTANT UNE TENEUR EN SODIUM RÉDUITE

(30) Priority: 17.10.2014 US 201462065064 P
(43) Date of publication of application: 23.08.2017
(73) Proprietor: Société des Produits Nestlé S.A., 1800 Vevey (CH)
(72) Inventor: FORNY, Laurent, CH-1006 Lausanne (CH); LI, Jian, Chagrin Falls, Ohio 44022 (US); STROTHCAMP, Mary, Hudson, Ohio 44236 (US); DUPAS-LANGLET, Marina, CH-1350 Orbe (CH); DEVI, Anjna, Solon, Ohio 44139 (US)
(74) Representative: Couzens, Patrick John
(86) International application number: PCT/EP2015/073572
(87) International publication number: WO 2016/058995

(56) References cited:
- US-A- 3 377 171
- US-A- 4 407 839
- US-A- 4 859 473
- US-A- 6 013 298
- US-B1- 7 998 512
- BUSCH J L H C ET AL: "Sodium reduction: Optimizing product composition and structure towards increasing saltiness perception", TRENDS IN FOOD SCIENCE AND TECHNOLOGY, ELSEVIER SCIENCE PUBLISHERS, GB, vol. 29, no. 1, 7 September 2012 (2012-09-07), pages 21-34, XP028975101, ISSN: 0924-2244, DOI: 10.1016/J.TIFS.2012.08.005
- Jekle Mario: "Sodium content in baked products", Baking+Biscuit, 1 June 2014 (2014-06-01), pages 44-48, XP55238447, Retrieved from the Internet: URL:file:///C:/Users/DB52148/AppData/Local /Temp/2014-06_44_Sodium_content_in_baked_p roducts-1.pdf [retrieved on 2016-01-04]
- LYNCH E J ET AL: "Fundamental studies on the reduction of salt on dough and bread characteristics", FOOD RESEARCH INTERNATIONAL, ELSEVIER APPLIED SCIENCE, BARKING, GB, vol. 42, no. 7, 1 August 2009 (2009-08-01) , pages 885-891, XP026132002, ISSN: 0963-9969, DOI: 10.1016/J.FOODRES.2009.03.014 [retrieved on 2009-04-05]
- SANCHEZ C R S ET AL: "Brine vs. dry salt in breadmaking", THE BAKERS DIGEST: BD; THE INDUSTRY'S PRODUCTION MAGAZINE, MILLING & BAKING NEWS INC, KANSAS CITY,US, vol. 47, no. 2, 1 January 1973 (1973-01-01), pages 23-25,67, XP009187762, ISSN: 0005-4089
- Katharina Anne Konitzer: "Untersuchungen zur Salzwahrnehmung in Brot und Textur- Modellsystemen - Ein Beitrag zur Kochsalzreduktion in Lebensmitteln", , 21 July 2014 (2014-07-21), pages 1-226, XP55223664, Retrieved from the Internet: URL:https://mediatum.ub.tum.de/doc/1200694 /1200694.pdf [retrieved on 2015-10-26]

## Description

### Field of the Invention

The present invention relates to a process for manufacturing a bakery product comprising a salty tastant. In particular the invention relates to a process for manufacturing a bakery product having a powder applied to at least one surface, the powder particles comprising a starch-based material and a salty tastant.

### Background of the Invention

Sodium intake by consumers has been steadily increasing up to a point much higher than recommended by health authorities. The high intake of sodium has often been related to high blood pressure, which leads to many cardiovascular diseases, and also has been related to renal disease, stomach cancer, bone demineralization, and other conditions.

Considerable efforts have been made to reduce sodium in processed foods. Existing approaches for reducing sodium include controlling the total level of salt, using salt substitutes, and/or using flavour enhancers. However, reducing sodium has been a challenge because these existing approaches affect not only saltiness, but also flavour and texture. For example, reducing sodium in foods usually negatively impacts taste because sodium, in particular sodium chloride, provides basic flavour by itself and also enhances other flavours present in the food. Typical quality deteriorations related with the existing sodium reduction approaches are insufficient saltiness, off flavor and taste, alteration of appearance and inferior texture. Of course, flavour and texture are extremely important factors in the decision whether to consume nutritious foods or not and the consumer enjoyment of nutritious foods. US4407839 discloses the application of a powder comprising a starch based material and a salty tastant onto bread dough. US6013298 is concerned with the provision of reduced salt bread doughs comprising alkali metal gluconates as sodium chloride substitutes.

As used in this specification, the words "comprises", "comprising", and similar words, are not to be interpreted in an exclusive or exhaustive sense. In other words, they are intended to mean "including, but not limited to". The object of the present invention is achieved by the subject matter of the independent claims. The dependent claims further develop the idea of the present invention.

Accordingly, the present invention provides a process for manufacturing a bakery product having a powder applied to at least one surface, the powder particles comprising a starch-based material and a salty tastant. The invention relates to a process for manufacturing a bakery product comprising the steps of forming a dough; forming a powder, the powder particles comprising a starch-based material and a salty tastant; and applying the powder to at least one surface of the dough.

It has been surprisingly found by the inventors that applying powder particles comprising a starch-based material and a salty tastant to a surface of a bakery product increases the saltiness perception, allowing such products to be formulated with a reduced overall amount of salt. For example, a pizza with cornmeal applied to the base in traditional fashion could be re-formulated with only 70 % of the original sodium chloride content when part of the sodium chloride was coated onto the cornmeal applied to the base. The pizza with sodium chloride coated onto the cornmeal was found to taste as salty as the original higher sodium chloride-content pizza. Furthermore, the pizza with sodium chloride coated onto the cornmeal was found to taste more salty than a pizza with the same amount of sodium chloride simply applied to the base of the pizza in addition to cornmeal.

### Brief Description of the Drawings

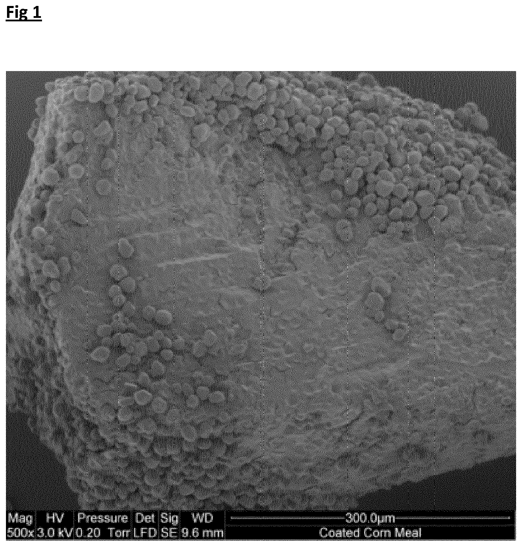

Figure 1 shows a scanning electron micrograph of the surface of cornmeal coated with sodium chloride.

### Detailed Description of the invention

Consequently the present invention relates to a process for manufacturing a bakery product having a powder applied to at least one surface, the powder particles comprising a starch-based material and a salty tastant. Some bakery products contain voids and so may have internal surfaces, but the term surface in this specification refers to an external surface of the bakery product. The powder applied to at least one surface may be affixed to the surface, for example a sticky component such as a gum may be present on the bakery product's surface or in the powder to hold the powder or, in the case of a dough-based bakery product, the uncooked or partially cooked dough may itself be sufficiently sticky to cause powder applied to it to remain in place. Indeed a powder may conveniently be a traditional component of the bakery product, for example flour added to prevent dough sticking to preparation surfaces. Such products have the added advantage that the consumer may consider the powdered surface to be a sign of artisanal manufacture. Applying the salty tastant comprised with starch-based material in the powder particles allows them to adhere better to the bakery product surface, particularly a dough surface. Applying the salty tastant comprised with starch-based material in the powder particles also provides better control of the salty tastant distribution. Salty tastants such as sodium chloride when applied directly in powder form are difficult to apply homogeneously. An aqueous spray of sodium chloride is easier to apply homogeneously, but adds water to the product which then needs to be evaporated and may cause unwanted textural changes. By being applied to a surface of the bakery-product, the particles comprising a salty tastant immediately come into contact with saliva and or the tongue of the consumer when the bakery product is eaten. This provides a stronger salty response than having the same amount of salt within the product matrix, where other components may interfere with the saltiness perception, and much of the salty tastant may be swallowed without reaching salt taste receptors in the mouth.

The bakery product may be in a un-baked or part-baked form, such as bakery products sold as ready-to-bake products for the later cooking, for example in the consumer's home. The starch-based material may be starch itself, or it may be a material which comprises starch such as flour. A salty tastant is any material which tastes salty. It may be a single material such as sodium chloride, or it may be a combination of materials which together taste salty, for example a mixture of potassium chloride and lysine monohydrochloride as described in EP2747583.

The proportion of salty tastant and starch-based material in the powder particles will depend on the strength of saltiness of the tastant and the type of bakery product being produced. The powder particles of the bakery product produced by the claimed method comprise between 50 wt.% and 70 wt.% starch-based material and between 30 wt.% and 50 wt.% salty tastant on a dry basis. The weight of the powder particles comprising a starch-based material and a salty tastant is between 1.2 and 6.0 % of the weight of the un-powdered bakery product on a dry basis.

The starch-based material and salty tastant may be combined in the powder particles in a number of ways, for example the salty tastant and starch-based material may be mixed together with water to form a slurry which is then dried to a powder with or without the addition of a binding agent such as a hydrocolloid. The salty tastant and starch-based material may be mixed together with a fat and then formed into a powder. The salty tastant may be coated onto the surface of the starch-based material. In this way, the surface area of the salty tastant directly exposed to the tongue is maximized.

The starch-based material may be selected from the group consisting of wheat flour, maize starch, cornmeal, buckwheat flour, millet flour, amaranth flour, quinoa flour, potato starch, sweet potato flour, tapioca starch, rice starch, rice flour, sorghum flour, bean flour, pea flour, pea starch, soy flour, chickpea flour, cowpea flour, lentil flour, bambara bean flour, lupin flour, chestnut flour and combinations of these. The starch-based material may be modified starch. Cornmeal and wheat flour are traditionally used to prevent dough sticking to preparation surfaces and to finish bakery products. These may introduce an appealing texture and flavour. Cornmeal is a coarse flour ground from dried maize. When used in the bakery product of the invention cornmeal and wheat flour provide good consumer acceptance for the addition of a salty tastant on the surface of the bakery product and adhere well to a dough surface. Consumers may be unwilling to try products marketed as having reduced salt as they believe that the product will have been altered in a way they won't like and that the product will have reduced taste. It is therefore beneficial to introduce the salty tastant on the surface of the reduced salt bakery product in a way which is visually very similar to the product they are familiar with. The starch-based material may be cornmeal or wheat flour.

The particle size of the powder particles should ideally match the particle size of the powders commonly used for finishing that type of bakery product to aid consumer acceptance. For example, a thin-crust "Italian style" pizza may be finished with a fine flour, whereas a deep pan pizza or certain specialty breads may be have a larger particle size finishing powder on their base such as cornmeal or a semolina flour (coarse middlings from wheat such as durum wheat, and from other grains, such as rice and maize). The powder particles comprising a starch-based material and a salty tastant may have an average diameter of between 50 µm and 3 mm, for example between 100 µm and 2 mm. The starch-based material may be semolina.

The effect of the powder particles comprising a starch-based material and a salty tastant on the taste of the overall product increases as the overall product size decreases. For example, adding powder particles comprising a starch-based material and a salty tastant to the base of a thin-crust pizza with a simple cheese and tomato topping provides a greater effect on saltiness perception than adding the same weight of powder particles to a pizza with a thicker crust and more topping.

Humans have added common salt (sodium chloride) to their food for thousands of years and have grown accustomed to its taste. As a result, the most desirable saltiness profile is that obtained with sodium chloride. The salty tastant of the powder particles in the baked product of the invention may comprise sodium chloride. For example the salty tastant of the powder particles in the baked product of the invention may be sodium chloride. Sodium chloride may only be present in the powder, but in this case, a non-sodium chloride salty tastant should be added to the bakery product otherwise the sodium chloride in the powder would give a strong initial salty taste, fading to a rather bland taste as the rest of the bakery product was broken down in the mouth. The bakery product of the invention may have at least 20 wt.% of the total sodium in the product in the powder, for example at least 30 wt.% of the total sodium in the product in the powder. The bakery product of the invention may have at least 30 wt.% of the total sodium chloride of the product in the powder. Salt is used in most bread dough recipes to control the rate of fermentation and to give flavour. The presence of salt in a yeast-leavened dough inhibits fermentation which, in a traditional wheat flour dough strengthens the developing gluten. This results in a bread with a stable crumb, a long shelf-life and more taste than breads without salt. It is therefore beneficial to incorporate some sodium chloride in fermented dough. The bakery product of the invention comprising fermented dough and having sodium chloride as the salty tastant may have between 10 and 70 wt.% of the total sodium chloride in the powder and dough present in the dough. For example, the bakery product of the invention comprising fermented dough and having sodium chloride as the salty tastant may have between 20 and 60 wt.% of the total sodium chloride in the powder and dough present in the dough, for further example between 30 and 50 wt.%. In the context of the present invention, the term dough refers to uncooked dough, partially cooked dough or cooked dough. Uncooked dough is a thick malleable mixture of a starch-containing material and a liquid. The dough may be gluten free. Cooked dough may be for example bread or pastry.

Powder particles comprising a starch-based material and a salty tastant may be used to reduce the overall sodium content of a bakery product. Sodium chloride may not be the only source of sodium in a bakery product, for example sodium bicarbonate (baking soda) may be added as a leavening agent. The bakery product produced by the method of the invention has a sodium level of below 600 mg per 100 g, for example it may have a sodium level below 300 mg per 100 g, for further example below 140 mg of sodium per 100 g. The U.S. Food and Drug Administration define meals and main dishes to be "low in sodium" if they contain 140 mg or less of sodium per 100g. The sodium added in the form of sodium chloride in the bakery product of the invention may be below 300 mg sodium per 100 g, for further example below 140 mg of sodium per 100 g. The bakery product may be a ready-to-bake product, for example it may be uncooked or partially cooked. The ready-to-bake bakery product may be sold frozen or chilled.

The bakery product may comprise a filling or topping. The filling or topping may be selected from the group consisting of cheese, meat, vegetables and combinations of these. The bakery product may comprise a fermented dough and a filling or topping selected from the group consisting of cheese, meat, vegetables and combinations of these. The bakery product produced by the claimed method is a pizza or a savoury turnover The bakery product is particularly advantageous when in the form of a bakery product having a topping, as slices of these bakery products are almost always placed in the mouth oriented with the topping uppermost. This orientation allows a powder applied to the base of the bakery product (e.g. the pizza base) to rapidly come in contact with the tongue of the consumer, providing a strong initial salty sensation when the powder particles comprise a starch-based material and a salty tastant. For filled bakery products where the filling is enclosed, or mostly enclosed, such as a savoury turnover, Cornish pasty, empanada, samosa, bridie or sausage roll, the powder may be applied all around the external surface of the product to ensure good contact with the tongue regardless of the orientation in the mouth chosen by the consumer. Many filled bakery products have a flat base on which the product sits during baking, for example a Cornish pasty. This surface is traditionally dusted with a powder such as flour, and during consumption the flat surface is naturally placed in the mouth in contact with the tongue as this orientation fits the mouth shape best. The powder particles comprising a starch-based material and a salty tastant are therefore particularly effective and unnoticeable when applied to the flatter base surface. Turnovers may be made by placing a filling on a piece of dough, folding the dough over, and sealing it before baking. Alternatively, a top and bottom dough sheet may be used to cover a filling. Fillings may also be enclosed, or partly enclosed, by co-extrusion of dough and filling. One type of savoury turnover, sometimes called a filled sandwich, is the Nestle product HOT POCKETS® which is designed to be heated in a microwave before consumption. The bakery product of the invention is a pizza or a savoury turnover.

The present invention pertains to a process tor manufacturing a bakery product comprising the steps of forming a dough; forming a powder, the powder particles comprising a starch-based material and a salty tastant; and applying the powder to at least one surface of the dough. The powder may be applied to the dough when it is uncooked, partially cooked or fully cooked. In the context of the present invention, the term forming refers to combining components to create something; it does not necessarily include shaping. The process may include the further step of adding a filling or a topping.

The powder may be applied to the dough in the process of the invention by placing uncooked dough onto the powder. For example, the uncooked dough may be formed into balls which are placed on a bed of the powder so that powder adheres to the uncooked dough before the dough is pressed and trimmed to shape, for example a pizza base. As a further example, the uncooked dough may be formed into a thin layer or sheets, for example using a roller or laminator, and deposited onto a conveyer having a layer of powder on its surface. The dough sheet may then be cut to shape, for example to form the top and bottom casings of a turnover. In the case of a yeast-leavened dough, the dough may be proofed before the powder is applied. The dough may be cut or pressed to shape before or after the powder is applied. A coextruded dough enclosing a filling may be coated with powder at the exit of the extruder, or placed on a powder-coated surface so that the powder adheres to the dough. The dough may be treated with a material to aid adhesion of the powder to the dough, for example an oil or a gum solution.

The powder in the process of the invention may be formed by coating the starch-based material with an aqueous solution of salty tastant and then drying the coated edible carrier. For example, a starch-based material such as a coarse cornmeal may be placed in a revolving pan and a solution of a salty tastant such as sodium chloride sprayed onto the starch-based material as it tumbles in the pan. Once the solution has been fully distributed over the starch-based material, low humidity warm air is blown into the pan to dry the coated material and then the process is repeated until the desired weight of salty tastant has been built up on the starch-based material. The coated starch-based material may be further dried in an oven if required. For further example, the starch-based material may be coated with salty tastant by application of an aqueous solution in a fluidized-bed coater.

The powder in the process of the invention may be formed by wetting powdered salty tastant and then mixing with a powdered starch-based material so as to cause the salty tastant to adhere to the starch-based material, and then drying the resulting powder particles. The powdered salty tastant may have a smaller particle size than the starch-based material onto which it adheres. For example, a fine salt powder may be wetted with around 2 wt.% water and then mixed with a coarse cornmeal.

The salty tastant in the process of the invention may comprise sodium chloride, for example the salty tastant in the process of the invention may be sodium chloride. The starch-based material in the process of the invention may be flour, for example wheat flour or cornmeal. The bakery product manufactured by the process of the invention is a pizza or a savoury turnover.

### Examples

### Example 1: Salt reduction in pizza

Different approaches were compared for reducing the salt content of a pizza base to 70%.

| | Sample | Salt |
|---|---|---|
| A | Reference | 100% |
| | | 100% in dough |
| B | Negative control | 70% |
| | | 70% in dough |
| C | Salt + cornmeal on base | 70% |
| | | 30% at bottom |
| D | Salt coated cornmeal on base | 70% |
| | | 30% at bottom |

The reference was a pilot plant scale recipe for a "rising crust" pizza. The pizza base was made from a 600 g of yeast-leavened dough which contained 6.26 g sodium chloride. After proofing, the dough was placed onto yellow cornmeal to pick up 6.5 g of cornmeal. The pizza base was topped with tomato and cheese and frozen.

For the negative control (B), the sodium chloride in the dough was reduced to 70 wt.% of the reference level (4.38 g sodium chloride in 600 g uncooked dough) with no other changes. For samples C and D, the sodium chloride in the dough was reduced to 40 wt.% (2.50 g sodium chloride in 600 g uncooked dough) with an additional 30 wt.% of sodium chloride (1.88 g sodium chloride) added to the base together with 4.6 g cornmeal. For sample C, the sodium chloride (fine table salt) was simply added in addition to the cornmeal, while in sample D the sodium chloride was added coated onto the cornmeal.

To prepare the coated cornmeal for sample D, sodium chloride was dissolved in demineralized water before being sprayed onto cornmeal rotating in a tumbler. The coated cornmeal was then dried to a water activity below 0.5 and sieved through a 2 mm sieve. The surface of the coated cornmeal was examined by Scanning Electron Microscopy (Figure 1) and was found to be coated in small crystals. These crystals were confirmed to be sodium chloride by Energy-Dispersive X-ray spectroscopy (EDX) mapping.

After topping (tomato/cheese) and baking, the pizzas were assessed by a trained sensory panel. Eleven assessors convened during glossary development session to discuss and agree upon a common language to fully describe the samples included in the test. Samples were evaluated using a 15-point scale where 0=none and 15=extreme. Panelists evaluated each product 2 times according to a randomized balanced block design for serving position. This provides a dataset sufficient for statistical analysis.

A summary of the sensory results compared to the reference are presented in the table below.

| | Sample | Salt | Saltiness | Texture |
|---|---|---|---|---|
| B | Negative control | 70% of ref. (70% in dough) | Salt persistence was lower than reference. | Edge crispiness was higher than reference |
| C | Salt + cornmeal on base | 70% of ref. (30% at bottom) | Salt persistence was lower than reference. | Crispiness in both edge and centre and centre hardness were higher than reference. |
| D | Salt coated cornmeal on base | 70% of ref. (30% at bottom) | Similar saltiness to reference | Edge crispiness was the highest among all. Center crispiness was higher than reference. |

It can be seen that by applying a powder to the base of the pizza where the powder particles comprise cornmeal and sodium chloride (sample D), a 30 wt.% reduction of sodium chloride in the dough can be made without affecting the saltiness. No negative textural changes were observed.

## Claims

1. Process for manufacturing a bakery product comprising the steps of forming a dough; forming a powder, the powder particles comprising between 50 wt.% and 70 wt.% starch-based material and between 30 wt.% and 50 wt.% salty tastant on a dry basis; and applying the powder to at least one surface of the dough wherein the powder is formed by coating the starch-based material with an aqueous solution of salty tastant and then drying the coated edible carrier and wherein the bakery product is a pizza or a savoury turnover, and wherein the weight of the powder particles comprising a starch-based material and a salty tastant are between 1.2 and 6.0 % of the weight of the un-powdered bakery product on a dry basis, and wherein the bakery product has a sodium level of below 600 mg per 100 g.

2. A process for manufacturing a bakery product according to claim 1 wherein the powder is applied to the dough by placing uncooked dough onto the powder.

3. A process for manufacturing a bakery product according to any one of claims 1 to 2 wherein the salty tastant comprises sodium chloride.

## Patentansprüche

1. Verfahren zur Herstellung einer Backware, umfassend die Schritte des Bildens eines Teigs; des Bildens eines Pulvers, wobei die Pulverteilchen zwischen 50 Gew.-% und 70 Gew.-% Material auf Stärkebasis und zwischen 30 Gew.-% und 50 Gew.-% salzigen Geschmacksstoff auf einer trockenen Basis umfassen; und des Auftragens des Pulvers auf mindestens eine Oberfläche des Teigs, wobei das Pulver durch Beschichten des auf Stärke basierenden Materials mit einer wässrigen Lösung eines salzigen Geschmacksstoffs und anschließendes Trocknen des beschichteten essbaren Trägers gebildet wird und wobei die Backware eine Pizza oder eine pikante Teigtasche ist und wobei das Gewicht der Pulverteilchen umfassend ein auf Stärke basierendes Material und einen salzigen Geschmacksstoff zwischen 1,2 und 6,0 % bezogen auf das Gewicht der nicht mit Pulver versehenen Backware auf einer Trockenbasis beträgt und wobei die Backware einen Natriumgehalt von unter 600 mg pro 100 g aufweist.

2. Verfahren zur Herstellung einer Backware nach Anspruch 1, wobei das Pulver auf den Teig aufgetragen wird, indem ungekochter Teig auf das Pulver gelegt wird.

3. Verfahren zur Herstellung einer Backware nach einem der Ansprüche 1 bis 2, wobei der salzige Geschmacksstoff Natriumchlorid umfasst.

## Revendications

1. Procédé de fabrication d'un produit de boulangerie comprenant les étapes consistant à former une pâte ; former une poudre, les particules de poudre comprenant entre 50 % en poids et 70 % en poids de matériau à base d'amidon et entre 30 % en poids et 50 % en poids d'exhausteur de goût salé sur une base sèche ; et appliquer la poudre sur au moins une surface de la pâte dans lequel la poudre est formée par revêtement du matériau à base d'amidon avec une solution aqueuse d'exhausteur de goût salé puis séchage du support comestible revêtu et dans lequel le produit de boulangerie est une pizza ou un chausson salé, et dans lequel le poids des particules de poudre comprenant un matériau à base d'amidon et un exhausteur de goût salé est compris entre 1,2 et 6,0 % du poids du produit de boulangerie non pulvérulent sur une base sèche, et dans lequel le produit de boulangerie a un taux de sodium inférieur à 600 mg pour 100 g.

2. Procédé de fabrication d'un produit de boulangerie selon la revendication 1 dans lequel la poudre est appliquée sur la pâte en plaçant de la pâte non cuite sur la poudre.

3. Procédé de fabrication d'un produit de boulangerie selon l'une quelconque des revendications 1 à 2 dans lequel l'exhausteur de goût salé comprend du chlorure de sodium.
